**Europäisches Patentamt**

**European Patent Office**

**Office européen des brevets**

(19)

(11) Veröffentlichungsnummer: **0 201 144**
**B1**

(12)

# EUROPÄISCHE PATENTSCHRIFT

(45) Veröffentlichungstag der Patentschrift:
02.08.89

(21) Anmeldenummer: **86200798.6**

(22) Anmeldetag: **06.05.86**

(51) Int. Cl.⁴: **B 21 D 51/46**, B 67 B 3/20

(54) Verfahren für das Anbringen von Einlegescheibchen in Schraubverschlüsse.

(30) Priorität: **10.05.85 BE 902392**

(43) Veröffentlichungstag der Anmeldung:
**12.11.86 Patentblatt 86/46**

(45) Bekanntmachung des Hinweises auf die Patenterteilung:
**02.08.89 Patentblatt 89/31**

(84) Benannte Vertragsstaaten:
**AT CH DE FR GB LI LU NL**

(56) Entgegenhaltungen:
**DE-C-103 141**
**FR-A-2 307 593**
**GB-A-1 096 471**
**US-A-1 832 321**
**US-A-2 261 990**

(73) Patentinhaber: **de Wit, Hendrik Cornelis Marie,
Industriestraat 14, NL- 4715 ZG Rucphen (N.Br.)
(NL)**

(72) Erfinder: **de Wit, Hendrik Cornelis Marie,
Industriestraat 14, NL- 4715 ZG Rucphen (N.Br.)
(NL)**

(74) Vertreter: **Siemens, Andreas Meinhard Ernest,
Dipl.- Ing., SIEMENS & CIE. Roskam 8, NL- 4813
GZ Breda (NL)**

EP 0 201 144 B1

LIBER, STOCKHOLM 1989

**Beschreibung**

Die vorliegende Erfindung bezieht sich auf ein Verfahren für das Anbringen von Scheibchen die als Abdichtungsscheibchen dienen, in Schraubverschlüsse, insbesondere für den Verschluss von Flaschen, die üblicherweise mit gashaltigen Flüssigkeiten gefüllt sind, wie Mineralwasser und Frischgetränke, welche Kohlensäure enthalten.

Diese Flaschen werden auf automatischen Abfüllstrassen mit den betreffenden Flüssigkeiten in der gewünschten Qualität gefüllt angeliefert. Sodann wird eine Schraubkappe aufgesetzt und angezogen.

Die dazu verwendeten Schraubkappen sind durch Spritzguss hergestellte Kappen aus einem thermoplastischen Kunststoff, die innenseitig mit Gewinde versehen sind.

Der Verschluss von Flaschen für Flüssigkeiten, die mit einer gelöstes Gas enthaltenden Flüssigkeit gefüllt sind, ist jedoch ungenügend, weil nur eine äusserst geringe Leckage, zum Beispiel infolge geringer Formänderung der Kappe und begünstigt durch eine sogar geringe Temperatursteigung, verursacht, dass gelöstes Gas, wie Kohlensäure, entweicht und dass dadurch der Wert des Mineralwassers, Bieres oder Frischgetränkes völlig in Verlust gerät.

Es ist deshalb erforderlich, dass solche auf Flaschen aufsetzbare Schraubkappen mit einem runden Einlegescheibchen aus hartem geschäumtem Kunststoff mit geschlossenen Zellen versehen werden.

Dieser Arbeitsgang muss auf der Abfüllstrasse automatisch und sehr schnell auf die Schraubkappe angewendet werden, bevor die Schraubkappe auf den Flaschenhals, der mit Aussengewinde versehen ist, aufgeschraubt wird. Die Kappen haben eine zylindrische Form und sind an der zylindrischen Innenwand mit Gewinde versehen, das eine gewisse mit der der Flasche übereinstimmende Ganghöhe besitzt.

Direkt unter der Oberseite der Kappe endet dieses Gewinde und dort befindet sich eine kreisförmige Aussparung, in welche das Einlegescheibchen solcherart passt, dass die Öffnung des Flaschenhalses unter dem Schraubverschluss durch das Einlegescheibchen vollkommen verschlossen ist.

Durch die begrenzte Elastizität des Einlegescheibchens und den Druck des festgeschraubten Schraubverschlusses ist die Flasche dann völlig gasdicht verschlossen, sodass auch bei Langzeitlagerung und geringen Temperaturschwankungen kein Entweichen des Gases stattfinden kann.

Dabei stellt sich das Problem, dass das Scheibchen genau passend und schnell in den Schraubverschluss knapp unter der Oberseite und parallel zur inneren Oberfläche desselben in die Aussparung gebracht werden muss.

Selbstverständlich kann dies wegen der hohen Geschwindigkeit auf der Füllstrasse nicht mit der Hand oder mit Handgeräten ausgeführt werden.

Schnelligkeit und Genauigkeit sind eine wichtige Forderung, wobei das Innengewinde beim Einführen des Einlegescheibchens in den Schraubverschluss eine störende Funktion ausübt.

In der französischen Patentanmeldung FR-A-2 307 593 ist ein Verfahren gemäß dem Oberbegriff des Anspruchs beschrieben, bei dem ein rundes Verbindungsplättchen horizontal in die Verschlusskappe, die mit der Unterseite nach oben in einem Kappenhalter liegt, gelegt wird, und dann durch vertikalen Druck in die Kappe gedrückt wird.

Das Problem, solche Plättchen unbeschädigt über die Gewindefelder der Kappe bis unter die Kappenoberseite zu bringen, und dabei auch die Gewindefelder nicht im geringsten zu beeinträchtigen, ist damit nicht einschlägig zu lösen. Die vorliegende Erfindung bietet eine andere Lösung.

Das Verfahren zum Anbringen von Einlegescheibchen zur Abdichtung von Schraubverschlusskappen für Flaschen, bevor diese nach Abfüllung verschlossen werden, wobei ein vertikaler Oberstempel Druck ausübt in Richtung auf einen Unterstempel, wobei einer dieser Stempel von einem hohlen Tubus umschlossen ist, dessen Aussendurchmesser an der Druckstelle mit dem Innendurchmesser der einschlägigen Schraubverschlusskappe übereinstimmt, und wobei durch eine Zuführung jedesmal ein Scheibchen dem Ende des Tubus zugeführt wird, ist erfindungsgemäss dadurch gekennzeichnet, dass man unter eine vertikal wirkende Exzenterpresse eine feststehende Halterung stellt, die einen vertikalen teleskopisch durch eine Feder hochdrückbaren Tubus umfasst, der einen massiven Unterstempel umgibt, welcher an seiner Oberseite eine konkave Höhlung aufweist, wobei die Oberseite des Tubus durch die Federwirkung der genannten Feder über die Oberseite des Unterstempels hervorragt, und dass man das Scheibchen schräg in die Oberseite des Tubus stellt, sodass ein Rand davon den Rand der konkaven Höhlung des Unterstempels berührt, wonach man die Schraubverschlusskappe über die Oberseite des Tubus schiebt, und dann den Oberstempel durch die Exzenterpresse auf die Schraubverschlusskappe drücken lässt, wodurch das Scheibchen abdichtend in die dafür bestimmte Aussparung unter der Oberseite der Schraubverschlusskappe gedrückt wird.

Die Erfindung wird näher erläutert an Hand der beigefügten Zeichnungen, die schematisch einen Vertikalschnitt eines Werkzeuges für das Anbringen des Einlegescheibchens in die Schraubverschlusskappe in den zwei beschriebenen Phasen des Arbeitsganges darstellen.

Die Abmessungen des Werkzeuges sind den Abmessungen der Schraubverschlusskappe angepasst.

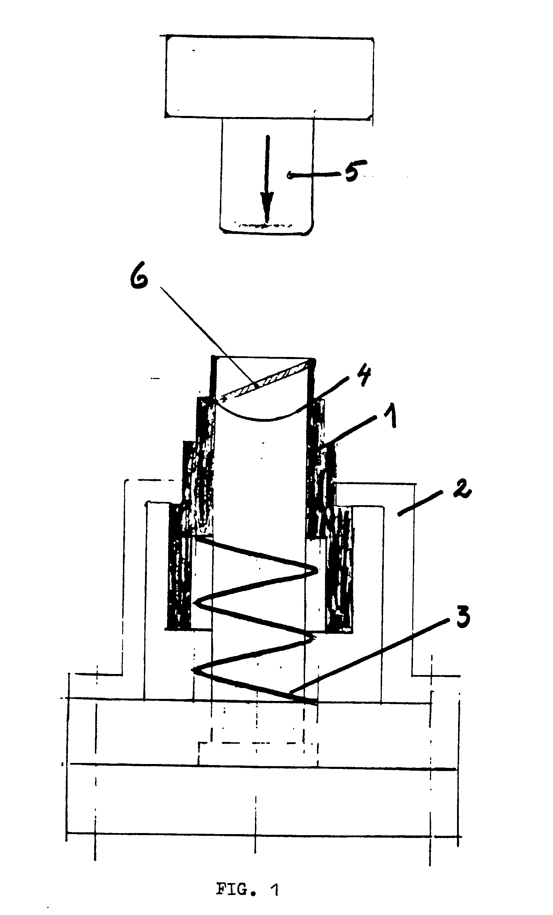

Die Figur 1 der Zeichnungen zeigt den vertikalen teleskopisch federnden Tubus (1) in der feststehenden Halterung (2), welche den Unterstempel mit der Feder (3) umfasst, welcher Unterstempel an seiner Oberseite die konkave Höhlung (4) aufweist, während (5) den senkrecht auf und ab bewegbaren Oberstempel darstellt.

Im Ende des Tubus (1) liegt das Einlegescheibchen (6), welches einen Durchmesser besitzt, der mit dem Innendurchmesser der Aussparung unter der Oberseite der Schraubverschlusskappe übereinstimmt.

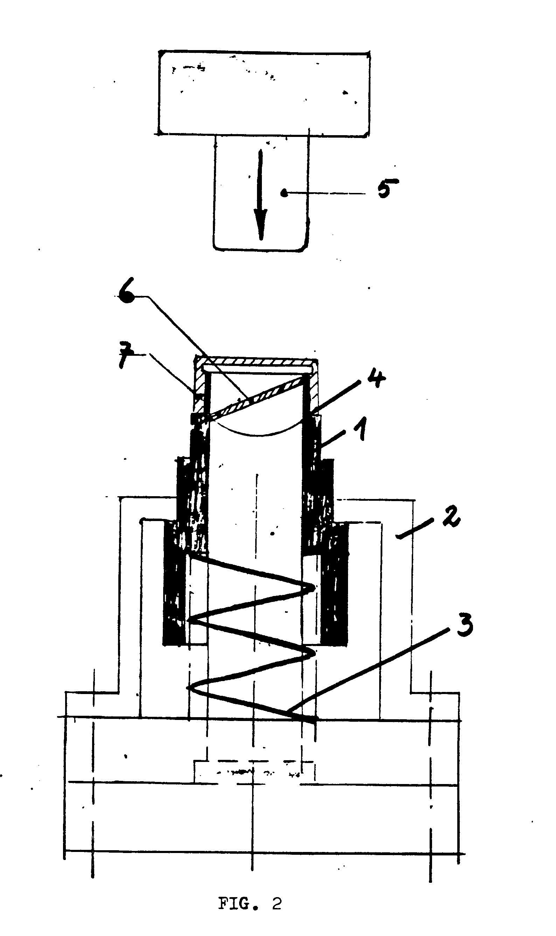

Die Figur 2 zeigt, wie die Schraubverschlusskappe (7) auf das obere Ende des federnden Tubus (1) gesetzt ist, wonach der Oberstempel (5) sich nach unten bewegt und das Einlegescheibchen (6) in die Aussparung der Schraubkappe unter deren Oberseite gebracht wird.

Mit dem Verfahren gemäss der Erfindung, können herangeführte Schraubverschlusskappen mit an derselben Stelle herangeführten Einlegescheibchen kontinuierlich in genau passender Art und Weise mit hoher Geschwindigkeit versehen werden.

Die in dieser Art mit Einlegescheibchen versehenen Schraubverschlusskappen stellen einen völlig abdichtenden Flaschenverschluss für Flaschen dar, auf welche sie nach der Abfüllung auf, der Füllstrasse aufgesetzt und fest gedreht werden.

Obwohl die Vorrichtung und das Verfahren hauptsächlich vorgesehen sind für das Beaufschlagen von Kunststoff-Schraubverschlusskappen mit Kunststoff-Einlegescheibchen zum Zwecke der Abdichtung der Flaschenverschlüsse, können sie gleichfalls verwendet werden für Schraubkappen aus Metall, sowie für andere Metallkappen, und für Einlegescheiben aus anderem Material, wie Kork oder Metallfolie, und die Vorrichtung kann in Ausführung grösserer Durchmesser auch angewandt werden für die Behandlung von Schraubdeckeln für Töpfe mit Schraubgewinde, wie z. B. für pharmazeutische und Lebensmittelverpackungen aus Glas.

**Patentanspruch**

Verfahren zum Anbringen von Einlegescheibchen (6) zur Abdichtung von Schraubverschlusskappen (7) für Flaschen, bevor diese nach Abfüllung verschlossen werden, wobei ein vertikaler Oberstempel (5) Druck ausübt in Richtung auf einen Unterstempel, wobei einer dieser Stempel von einem hohlen Tubus (1) umschlossen ist, dessen Aussendurchmesser an der Druckstelle mit dem Innendurchmesser der einschlägigen Schraubverschlusskappe (7) übereinstimmt, und wobei durch eine Zuführung jedesmal ein Scheibchen (6) dem Ende des Tubus (1) zugeführt wird, dadurch gekennzeichnet, dass man unter eine vertikal wirkende Exzenterpresse eine feststehende Halterung (2) stellt, die einen vertikalen teleskopisch durch eine Feder (3) hochdrückbaren Tubus (1) umfasst, der einen massiven Unterstempel umgibt, welcher an seiner Oberseite eine konkave Höhlung (4) aufweist, wobei die Oberseite des Tubus (1) durch die Federwirkung der Feder (3) über die Oberseite des Unterstempels hervorragt, und dass man das Scheibchen (6) schräg in die Oberseite des Tubus (1) stellt, sodass ein Rand davon den Rand der konkaven Höhlung (4) des Unterstempels berührt, wonach man die Schraubverschlusskappe (7) über die Oberseite des Tubus (1) schiebt, und dann den Oberstempel (5) durch die Exzenterpresse auf die Schraubverschlusskappe (7) drücken lässt, wodurch das Scheibchen (6) abdichtend in die dafür bestimmte Aussparung unter der Oberseite der Schraubverschlusskappe (7) gedrückt wird.

**Claim**

A working method for mounting gasket liners (6) for sealing of screw stoppers (7) for bottles after filling previous to closing, whereby a vertical upper die (5) brings to bear a pressure in the direction to a lower die, while one of said dies is enclosed by a hollow tube (1), which has an outer diameter at the point of pressure in keeping with the inner diameter of the used screw stopper (7), and whereby at every turn by a feed line a liner blade (6) is supplied to the end of the tube (1), characterized in that a seized toolholding device (2) is placed under a vertically operating excenter press ram, circumfering the vertical tube (1), which is movable upwards telescopically by a spring (3), said tube (1) embracing a solid lower die with a concave top (4), said top of tube (1) protruding over the upper side of the lower die by means of the force of the spring (3), and that the liner blade (6) is placed into the top of the tube (1) in inclined position, such that an edge of same reaches the rim of the concave top (4) of said lower die, whereupon the screw stopper (7) is slipped over the top of tube (1), and after that the upper die (5) is effected by the excenter press to exert a pushing force upon the screw stopper (7), whereby said liner blade (6) is pushed in a sealing position into the recess for same under the top side of the screw stopper (7).

**Revendication**

Un procédé pour la mise en place de rondelles (6) d'étanchéité dans des bouchons (7) d'obturation à vis pour bouteilles après le remplissage et avant le serrage, lorsque l'étampe supérieure (5) verticale exerce une pression dans la direction d'une étampe inférieure, l'une desdites étampes étant enfermée par un tube (1) creux, dont le diamètre extérieur au point d'application de la force correspond au diamètre intérieur dudit bouchon (7) d'obturation à vis, et chaque fois une rondelle (6) est transportée par un dispositif d'alimentation à la sortie du tube (1), caractérisé en ce qu'un support (2) arrêté est posé sous une presse verticale à excentrique, ledit support (2) enfermant ledit tube (1) vertical, qui est poussé en haut d'une manière télescopique par un ressort (3), ledit tube (1) enfermant une étampe massive inférieure, qui a un creusage (4) de forme concave, et la partie supérieure du tube (1) saillit sur la partie supérieure de l'étampe inférieure par l'action du ressort (3), et la rondelle (6) est posé d'une manière inclinée dans la partie supérieure du tube (1), ainsi qu'un rebord de la rondelle touche le collet du creusage (4) de forme concave de l'étampe inférieure, et puis le bouchon d'obturation à vis (7) est fait glisser sur la partie supérieure du tube (1), l'étampe supérieure (5) exerce la pression de la presse à excentrique sur le bouchon d'obturation à vis (7), par laquelle la rondelle (6) est poussée dans l'encoche pour l'étanchéité, qui est au dessous du côté supérieur du bouchon d'obturation à vis (7).

FIG. 1

FIG. 2